(19) Europäisches Patentamt
European Patent Office
Office européen des brevets

(11) **EP 1 804 241 A2**

(12) **EUROPEAN PATENT APPLICATION**

(43) Date of publication:
**04.07.2007 Bulletin 2007/27**

(51) Int Cl.:
***G11B 7/095*** *(2006.01)*

(21) Application number: **06126406.5**

(22) Date of filing: **18.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.12.2005 JP 2005378680**

(71) Applicant: **KABUSHIKI KAISHA TOSHIBA**
**Tokyo 105-8001 (JP)**

(72) Inventors:
• **Maeda, Satoru**
**Toshiba corporation**
**Tokyo 105-8001 (JP)**

• **Iwata, Katsuo**
**Toshiba Corporation**
**Tokyo 105-8001 (JP)**
• **Okano, Hideaki**
**Toshiba Corporation**
**Tokyo 105-8001 (JP)**

(74) Representative: **Henkel, Feiler & Hänzel**
**Patentanwälte**
**Maximiliansplatz 21**
**80333 München (DE)**

(54) **Optical pickup, optical disc apparatus, and radial tilt detection method**

(57)  An optical pickup apparatus according to an embodiment of the invention has an object lens (26) which captures a light beam reflected on a recording surface of an optical disc D, a polarization control element (24) which divides a light beam captured by the object lens into a predetermined number of beams, and diffracts each divided beam in a predetermined direction, a photodetector (27) which detects a light beam divided and diffracted by the polarization control element for each divided component, and a signal processor (2) which calculates a tilt component (radial tilt) along the radial direction of am optical disc, in an output of the photodetector, as a difference between a signal component (FES) indicating a change in the distance from the object lens to an optical disc, and a signal component (DPD) indicating a position in the radial direction of a string cf signal components recorded in an optical disc.

FIG.1

EP 1 804 241 A2

**Description**

The present invention relates to an optical disc apparatus which records or reproduces information in/from an optical disc or an optical information recording medium, and an optical pickup incorporated in the optical disc apparatus.

A long time has been passed since the commercialization of an optical disc capable of recording information or reproducing recorded information in a noncontact manner by using a laser beam, and an optical disc apparatus (optical disc drive) capable of recording and reproducing information in/from an optical disc. Optical discs called CD and DVD with several kinds of recording density have become popular.

Recently, an ultra-high density optical disc (High Definition Digital Versatile Disc, hereinafter called HD DVD), which is capable of saving HD-standard video data and high-quality surround audio data in one disc by using a blue or blue-purple laser beam with a short wavelength, has been put to practical use.

In DVD or HD DVD optical disc, particularly HD DVD optical disc, it is known that a record mark itself is very small because of an increased density of a string of record marks, a change in the thickness of a layer to protect a recording layer of a recording medium has a large influence, and reproduction of information becomes unstable. It is also known that the distance from a string of recording marks to an object lens for reproducing information recorded in an optical disc is changed for each string of record marks, when receiving a reflected laser beam from an optical disc in the state given a tilt (radial tilt) to the recording surface of an optical disc by a lens shift control (to give a tilt to an optical axis) which enables reproduction of information from strings of record marks.

In the above background, Japanese Patent Application Publication (KOKAI) No. 2000-123390 proposes a tilt control function, which detects a tilt by calculating the difference between a first tilt detection value obtained by calculating an amplitude difference of a difference reproducing signal of a pit with a fixed pitch arranged in a direction orthogonal to a center of track by displacing a predetermined amount, and a second tilt detection value obtained by calculating a sum reproducing signal of a pit formed at a predetermined pitch from a tracking error signal, and crosses the center of an optical axis of a laser beam and a disc surface at a right angle according to the detection signal.

However, in the Japanese Patent Application Publication (KOKAI) No. 2000-123390, it is difficult to reproduce recorded information from a HD DVD disc having strings of record marks with a fine pitch demanding a lens shift.

An object of the invention to provide an optical pickup and an optical disc apparatus, which prevents a reproducing signal from becoming unstable caused by a radial tilt that is a tilt of a recording surface of a recording medium (optical disc), and accurately detects a radial tilt component.

According to an aspect of the invention, there is provided an optical pickup comprising:

an object lens which captures a light beam reflected on a recording surface of a recording medium;
a diffraction means which divides a light beam captured by the object lens into a predetermined number of beams, and diffracts each divided beam in a predetermined direction;
a photodetector which detects a light beam diffracted by the diffraction means for each divided component; and
an arithmetic circuit which calculates a tilt component along the radial direction of a recording medium, in an output of the photodetector, as a difference between a signal component indicating a change in the distance from the object lens to a recording medium, and a signal component indicating a position in the radial direction of a string of signal components recorded in a recording medium.

The invention can be more fully understood from the following detailed description when taken in conjunction with the accompanying drawings, in which:

FIG. 1 is a schematic diagram showing an example of an optical disc apparatus according to the invention;
FIG. 2 is a schematic diagram explaining the main parts of an optical pickup of the optical disc apparatus shown in FIG. 1;
FIG. 3 is a graph explaining a difference in an output signal by combination of channels of DPD signal generated from the optical pickup shown in FIG. 2;
FIG. 4 is a graph explaining the relation between a DPD signal generated from the optical pickup shown in FIG. 2, and an offset component; and
FIG. 5 is a schematic diagram showing an example of a radial tilt generator capable of eliminating a difference in an output signal and influence of an offset component shown in FIG. 3 and FIG. 4.

Embodiments of the invention will be explained in detail hereinafter with reference to the accompanying drawings.

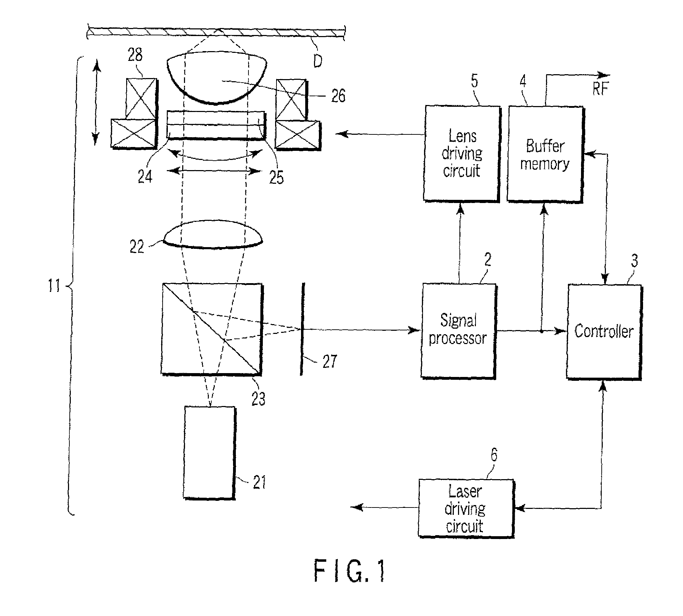

FIG. 1 shows an example of a configuration of an information recording/reproducing apparatus (optical disc apparatus) according to the invention.

An optical disc apparatus 1 shown in FIG. 1 includes an optical pickup (PUH: Pick Up Head) 11, which can record information in a not-shown recording layer (organic film, metallic film or phase changing film) of a recording medium (optical disc) D, read information from the recording layer, or erase information recorded in the recording layer. In addition to the optical pickup 11, the optical disc unit 1 has mechanical elements, such as, a not-shown head moving mechanism which moves the optical pickup 11 along a recording surface of the optical disc D, and a disc motor (not shown) which rotates the optical disc D at a predetermined speed. These mechanical elements will not be described in detail. The optical disc unit 1 also includes a signal processor to process the output of a photodetector incorporated in the optical pickup 11, and a controller to control the mechanical elements of the optical pickup 11, as described later.

A recording layer of the optical disc D has a guide groove, a track or a string of record marks (recorded data) formed concentrically or spirally at a pitch of 0.34 $\mu$m - 1.6 $\mu$m. A string of recorded data (record marks) may be molded as one body by embossing when molding a disc.

A laser beam from the a semiconductor laser element (LD: Laser diode) 21 is guided to a polarization beam splitter (PBS) 23 before collimated by the collimator lens 22, and a plane of polarization of a wavefront is directed to a specific direction, and collimated (paralleled) by a collimator lens 22.

The laser beam collimated by the collimator lens 22 is guided to an object lens (OL) 26, passing through an optical dividing element, or a hologram plate (HOE) 24 and 1/4 wavelength plate (polarization control element) 25.

The laser beam guided to the object lens 26 is given a predetermined convergence by the object lens 26. (The laser beam emitted from the LD 21 is guided to the OL 26, and provides a minimum optical spot at a fixed focal position of the OL 26.) The object lens 26 is made of plastic, and has a numerical aperture NA of 0.65, for example.

A laser beam reflected on the information recording surface of the optical disc D (hereinafter called a reflected laser beam) is captured by the object lens 26, converted to a beam with a substantially parallel cross section, and guided to the collimator lens 22. In this time, the direction of wavefront polarization is changed by 90° with respect to the direction of polarization of a laser beam toward the optical disc D. The laser beam is divided into a predetermined number of beams by the HOE (light-dividing element) 24 (according to the arrangement of detection area of a photodetector (PD) 27, and give a predetermined diffraction direction.

The reflected laser beam returned to the collimator lens 22 is given a predetermined convergence by the collimator lens 22, and the direction of wavefront polarization is turned by 90° by the 1/4 wavelength plate 25, and reflected on the polarization plane of the polarization beam splitter 23, forming an image on the light-receiving surface of the photodetector (PD) 27.

A current output from the photodetector 27 is converted to a voltage by a not-shown I/V amplifier, and applied to a signal processor 2 where the signal is converted to an RF (reproducing signal), a focus error signal FE, a track error signal TE, and a radial tilt signal TR that is a tilt of the optical disc D to the radial direction of the recording surface with respect to an axial line or an optical axis passing through the center of the object lens 26.

Among the output signals from the signal processor 2, the RF signal is converted to a predetermined signal format by a controller 3 (or a not-shown data processor), and output to a temporary storage, an external storage, or an information display/reproducing apparatus (personal computer, monitor, etc.) through a buffer memory 4.

Among the output signals from the signal processor 2, the focus error signal FE and track error signal TE concerning the position of the object lens 26 are used to generate a focus control signal FC and a tracking control signal TC for correcting the position of the object lens 26. FC and TC set based on FE and TE are supplied to a focus coil and a track coil 28 through a lens driving circuit 5.

Further, among the output signals from the signal processor 2, a signal RT indicating a radial tilt is used to generate a tilt control signal RC to control a tilt of the object lens 26 in the radial direction within a predetermined range with respect to the recording surface of the optical disc D, and supplied to shared focus coil and track coil through the lens driving circuit 5, together with a lens shift signal LC for lens shift LS control.

The focus error signal FE is used to set the control amount of the focus control signal FC, which moves the object lens 26 in the focus (optical axis) direction orthogonal to the surface including the recording layer of the optical disc D, so that the distance from the object lens 26 to the recording layer of the optical disc D becomes identical to the focal distance of the object lens 26.

The track error signal TE is used to set the control amount of the track control signal TC, which moves the object lens 26 in the direction orthogonal to the extending direction (Rad direction) of the track (string of record marks) T of the recording layer.

Further, a laser driving signal defined according to a signal related to the intensity of light emitted from the LD (laser Diode) 21, among the output signals from the signal processor 2, is supplied to the LD 21 through a laser driving circuit 6. On the laser driving signal, the recording data entered through the controller 3 (or a not-shown data controller), or the largeness of the driving currents corresponding to reproduction or erasing are sequentially superposed.

Various known methods are usable as a method of detecting a focus error, track error and radial tilt. In particular, as a track error detection method, DPD (Differential Phase Detection) and PP (Push Pull) are supposed. However, a track pitch is narrow in a HD DVD disc, and it is necessary to consider an influence of lens shit of the object lens 26. Therefore, CPP (Compensated Push Pull, compensated track error detection method) is also used to detect a track error.

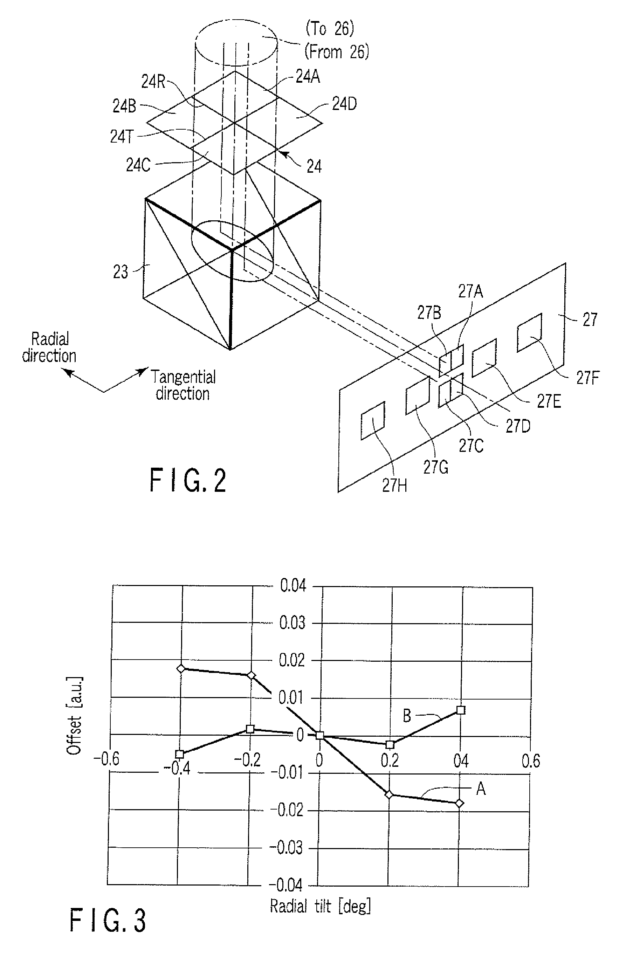

FIG. 2 shows an example of a pattern of dividing a luminous flux by a hologram element incorporated in an optical pickup of the optical disc apparatus shown in FIG. 1, and an arrangement and form (arrangement pattern) of a light-receiving area of a photodiode.

As shown in FIG. 2, the light-dividing element (HOE) 24 includes optical diffraction areas 24A - 24D divided into four by division lines 24R and 24T crossing rectangularly at a position substantially identical to the optical axis center passing through the object lens 26.

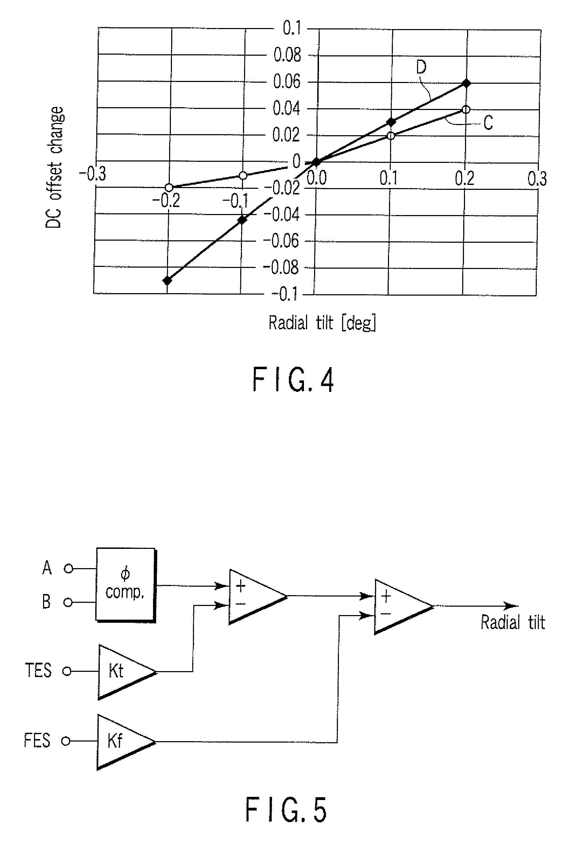

Each optical diffraction area can diffract a reflected laser beam from the recording layer of the optical disc D in a desired direction toward a plurality of detection cell (8 cells in FIG. 2, 4 of them are of one-body type for detecting a focus error by the knife-edge method) formed on the light-receiving surface of the photodetector 27. The size and distance (positional relationship) of each detection cell is optionally set based on the size of the optical pickup 11 and the diffraction pattern of the diffraction area prepared in the light-dividing element 24.

As characteristics demanded for the light-dividing element 24, the shape, area ratio, division number and diffraction direction can be optionally set by combination with the arrangement of the light-receiving area (detection cell) of the photodetector 27, as long as they can increase S/N of a tracking error signal (PP) and a compensated tracking error signal (CPP) obtained by the differential phase detection method (DPD) and the push pull method used for detection of a tracking error when reproducing recorded information from the optical disc D, they can be used for detection of a focus error and a signal for correcting a disc tilt, and they can securely detect a reflected laser beam from the recording layer of the optical disc D.

In the light-dividing element 24 shown in FIG. 2, the diffraction patterns (diffraction areas) divided into four by the crossed division lines 24T in the tangential direction and in the radial direction are recognized as A - D counterclockwise. This indicates that the areas A and C are rotationally symmetrical about the intersection of the division lines 24R and 24T, and the area C cannot adjoin to the area A. Likewise, the area B cannot adjoin the area D.

As an arrangement of the detection cells of the photodetector 27, it is necessary that a phase difference in an output of a cell opposite to a cell to have a defocus image can be obtained, in the knife-edge (detection) cells, that is, the pairs of above-mentioned 27A/27B and 27C/27D, when the focus offset is adjusted to have a maximum RF amplitude (reproduction output). Of course each string of detection cells can be controlled (combined) by a not-shown wiring pattern for signal processing.

An example will be explained by referring to FIG. 2. A laser beam diffracted in the area 24A of the light-dividing element 24 forms an image in the pair of detection cells 27A and 27B for detecting a focus error, and a laser beam diffracted in the area 24D forms an image in the pair of detection cells 27C and 27D. The laser beam diffracted in the area 24A also forms an image in a detection cell 27E for detecting a phase difference. The laser beam diffracted in the area 24D also forms an image in a detection cell 27H for detecting a phase difference. The laser beam diffracted in the area 24C forms an image in a detection cell 27G, and the laser beam diffracted in the area 24B forms an image in a detection cell 27F.

In this case, a phase difference (DPD) is preferably a signal obtained from the difference between the sum of a detection output of a detection cell to detect the laser beam diffracted in the area 24A and a detection output of a detection cell to detect the laser beam diffracted in the area 24C, and the sum of a detection output of a detection cell to detect the laser beam diffracted in the area 24B and a detection output of a detection cell to detect the laser beam diffracted in the area 24D.

Namely, a radial tilt can be stably obtained by obtaining a phase difference from the outputs of the detection cells, which detect four laser beams divided for detecting a phase difference by the diffraction areas 24A - 24D of the light-dividing element 24 shown in FIG. 2 and two laser beams for detecting a focus error by the knife-edge method, as a laser beam divided (diffracted) in the area not parallel to the division line in the radial direction and the division line in the tangential direction, by taking the position where the division lines are crossed as a reference, for detection of a phase difference (that is, by a crossed DPD).

Assuming that the outputs of the detection cells of the photodetector 27 are

$$\text{Output of cell 27E} \rightarrow \text{SE}$$

$$\text{Output of cell 27F} \rightarrow \text{SF}$$

$$\text{Output of cell 27G} \rightarrow \text{SG}$$

```
Output of cell 27H → SH
```

As explained hereinafter by referring to FIG. 3, a radial tilt is set based on a fluctuation in an offset change of phase comparison of channels when a tracking servo is effected (on the object lens 26), by a crossed DPD, that is

```
Ph (SE + SG) - Ph (SF + SH)
```

Ph indicates an operation for obtaining a phase difference.

FIG. 3 shows a combination of channels for obtaining a phase difference, that is, as an output of a photodetector, a relation between the degree of DC offset and radial tilt (deg), in the case that a phase difference is obtained from a laser beam diffracted in an adjacent area of the light-dividing element, and the case that a phase difference is obtained by the above-mentioned crossed DPD (the vertical axis is normalized by 1). The curve A indicates Ph (SH) - Ph (SE), that is, the case that a phase difference is obtained by using a laser beam diffracted by adjacent two areas of four diffraction areas of a light-dividing element. The curve B indicates Ph (SE + SG) - Ph (SF + SH), that is, a crossed DPD.

FIG. 4 shows an example of obtaining a radial tile by the outputs of the detection cells of the photodetector shown in FIG. 2 and the offset change shown in FIG. 3.

The curve C indicates the phase difference Ph (SH) - Ph (SE) when a tracking serve is operated by a crossed DPD (Ph (SE + SG) - Ph (SF + SH)). The curve D indicates the phase difference Ph (SB) - Ph (SC) when a tracking serve is operated by a crossed DPD (Ph (SE + SG) - Ph (SF + SH)).

Therefore, when assuming that the outputs of the detection cells 27A - 27D of the photodetector 27 are

```
Output of cell 27A → SA

Output of cell 27B → SB

Output of cell 27C → SC

Output of cell 27D → SD
```

A radial tilt amount RC can be obtained by

```
{Ph (SB) - Ph (SC)} - kt·DPD - kf·FES
```

Ph: an operation for obtaining a phase difference DPD is the above-mentioned crossed DPD output,

```
Ph (SE + SG) - Ph (SF + SH)
```

FES is a focus error output, and can be obtained by the equation, by assuming the single knife-edge method in FIG. 2

```
(SA + SD) - (SB + SC)
```

kt: Coefficient for the tracking control
kf: Coefficient for the focus control

This mathematical expression agrees with the previous explanation "an arrangement that a phase difference in an output of a cell opposite to a cell to have a defocus image can be obtained, in the knife-edge (detection) cells, that is, the pairs of above-mentioned 27A/27B and 27C/27D, when the focus offset is adjusted to have a maximum RF amplitude (reproduction output)".

As for the cell opposite to the cell to have a defocus image, the detector B and C are described in this example, but, it may be a combination of the detectors A and D because of variations in manufacturing.

The radial tilt can be easily obtained by the arithmetic circuit shown in FIG. 5 (incorporated in the signal processor 2 shown in FIG. 1).

As explained hereinbefore, according to the invention, it is possible to exactly detect a different offset amount for a radial tilt of a recording medium (optical disc), and as a result, it is possible to obtain a stable reproducing signal. Therefore, information can be stably reproduced from a HD DVD having high-density information. A reproducing signal is stabilized, and the reliability as an optical disc apparatus is increased.

Further, according to the invention, it is possible to exactly detect a different offset amount for a radial tilt of a recording medium (optical disc), and as a result, it is possible to obtain a stable reproducing signal. Therefore, information can be stably reproduced from a HD DVD having high-density information.

**Claims**

1. An optical pickup (11) **characterized by** comprising:

    an object lens (26) which captures a light beam reflected on a recording surface of a recording medium;
    a diffraction means (24) which divides a light beam captured by the object lens into a predetermined number of beams, and diffracts each divided beam in a predetermined direction;
    a photodetector (27) which detects a light beam diffracted by the diffraction means for each divided component; and
    an arithmetic circuit (2) which calculates a tilt component along the radial direction of a recording medium, in an output of the photodetector, as a difference between a signal component indicating a change in the distance from the object lens to a recording medium, and a signal component indicating a position in the radial direction of a string of signal components recorded in a recording medium.

2. The optical pickup according to claim 1, **characterized in that** the arithmetic circuit takes in a combination of outputs of light-receiving cells of the photodetector used to generate a signal for obtaining a displacement in the distance from the object lens to a recording medium, as an arrangement to obtain a phase difference of an output of a cell opposite to a cell to have an defocus image, in a state that the distance from the object lens to a recording medium is set so that a reproducing output corresponding to a string of signal components recorded in a recording medium becomes maximum, and performs signal processing

3. The optical pickup according to claim 1, **characterized in that** the arithmetic circuit adds a diffracted light divided into a predetermined number by the diffraction means and directed in each direction, to a light beam from an area different from an adjacent divided area, when a diffraction area of the diffraction means is divided, and calculates a difference in signals obtained by the addition.

4. An optical disc apparatus **characterized by** comprising:

    an optical pickup (11) having an object lens (26) which captures a light beam reflected on a recording surface of a recording medium; a diffraction means (24) which divides a light beam captured by the object lens into a predetermined number of beams, and diffracts each divided beam in a predetermined direction; a photodetector (27) which detects a light beam diffracted by the diffraction means for each divided component; and an arithmetic circuit (2) which calculates a tilt component along the radial direction of a recording medium, in an output of the photodetector, as a difference between a signal component indicating a change in the distance from the object lens to a recording medium, and a signal component indicating a position in the radial direction of a string of signal components recorded in a recording medium; and
    a signal processing circuit (3, 4) which obtains a reproducing output corresponding to information recorded on a recording surface of a recording medium, from a signal detected by the photodetector.

5. A radial tilt control method using an optical pickup having an optical pickup having an object lens which captures a light beam reflected on a recording surface of a recording medium; a diffraction means which divides a light beam captured by the object lens into a predetermined number of beams, and diffracts each divided beam in a predetermined direction; a photodetector which detects a light beam diffracted by the diffraction means for each divided component; and an arithmetic circuit which calculates a tilt component along the radial direction of a recording medium, in an output of the diffraction means, as a difference between a signal component indicating a change in the distance from the object lens to a recording medium, and a signal component indicating a position in the radial direction of a string of signal components recorded in a recording medium,

**characterized in that** the arithmetic circuit controls an object lens **characterized by** obtaining a phase difference in an output of a cell opposite to a cell to have a defocus image, to an on-focus state, in a state that a focus offset is adjusted to have a maximum RF amplitude (reproducing output).

6. The radial tilt control method according to claim 5, **characterized in that** the arithmetic circuit adds a light beam from an area different from an adjacent divided area, when a diffraction area of a diffraction means is divided, and calculates a difference in a signal obtained by the addition.

7. The radial tilt control method according to claim 5, **characterized in that** when a photodetector has eight detection cells, and outputs of four of them are paired each other, and when outputs of four independent detection cells are SE, SF, SG and SH, Ph is an operation for obtaining a phase difference, the output is DPD, paired cells are cells A and B and cells C and D, and the outputs are SA, SB, SC and SD, the arithmetic circuit calculates a radial tilt by

$$\{Ph\ (SB)\ -\ Ph\ (SC)\}\ -\ kt\cdot DPD\ -\ kf\cdot FES$$

$$DPD\ =\ Ph\ (SE\ +\ SG)\ -\ Ph\ (SF\ +\ SH)$$

kt: Coefficient for the tracking control
kf: Coefficient for the focus control

$$FES\ =\ (SA\ +\ SD)\ -\ (SB\ +\ SC),$$

when assuming a single knife-edge method.

FIG. 1

FIG.2

FIG.3

FIG. 4

FIG. 5

**EP 1 804 241 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000123390 A